# FASCICULE DE BREVET EUROPEEN

(11) **EP 2 266 005 B1**
(45) Date de publication et mention de la délivrance du brevet: **05.06.2019**
(21) Numéro de dépôt: 09728167.9
(22) Date de dépôt: 01.04.2009
(51) Int. Cl.: G06Q 10/06, G05B 23/02, G06F 11/30

(54) **PROCEDE DE DETERMINATION DU PRONOSTIC DE FONCTIONNEMENT D'UN SYSTEME**
VERFAHREN ZUR DEFINITION EINER BETRIEBSVORHERSAGE FÜR EIN SYSTEM
METHOD FOR DETERMINING THE OPERATING FORECAST FOR A SYSTEM

(30) Priorité: 02.04.2008 FR 0852171
(43) Date de publication de la demande: 29.12.2010
(73) Titulaire: AIRBUS (SAS), 31700 Blagnac (FR)
(72) Inventeur: MOREAU, Katell, 75015 Paris (FR); ROUET, Vincent, 78630 Orgeval (FR); FOUCHER, Bruno, 92320 Chatillon Sous Bagneux (FR)
(74) Mandataire: Gicquel, Olivier Yves Gérard
(86) Numéro de dépôt international: PCT/EP2009/002378
(87) Numéro de publication internationale: WO 2009/121583

(56) Documents cités:
- SIYU ZHANG: "Function estimation for multiple indices trend analysis using self-organizing mapping" EMERGING TECHNOLOGIES AND FACTORY AUTOMATION, 1994. ETFA '94., IEEE SY MPOSIUM ON TOKYO, JAPAN 6-10 NOV. 1994, NEW YORK, NY, USA,IEEE, 6 novembre 1994 (1994-11-06), pages 160-165, XP010139958 ISBN: 978-0-7803-2114-4
- TSAN SHENG NG: "An Application of the EM Algorithm to Degradation Modeling" IEEE TRANSACTIONS ON RELIABILITY, IEEE SERVICE CENTER, PISCATAWAY, NJ, US, vol. 57, no. 1, 1 mars 2008 (2008-03-01), pages 2-13, XP011204411 ISSN: 0018-9529

## Description

La présente invention a pour objet un procédé de détermination du pronostic de fonctionnement d'un système, en temps réel, à partir d'une valeur environnementale de ce système. La présente invention trouve des applications particulièrement avantageuses, mais non exclusives, dans le domaine de l'aéronautique, du nucléaire, du naval, de l'automobile, de la pétrochimie....

Un but de l'invention est d'optimiser la maintenance d'un système sous surveillance en déterminant en temps réel la défaillance de ce système. Un autre but de l'invention est d'embarquer le dispositif de surveillance dans le système à surveiller. L'invention a également pour but de déterminer en temps réel le pronostic de fin de vie du système sous surveillance.

Actuellement, le diagnostic d'un système sous surveillance, qui en pratique est une carte électronique, est réalisé par un dispositif d'enregistrement de valeurs environnementales. Ce dispositif est connu sous le nom anglais de Time Stress Measurement Device, TSMD (Dispositif de mesure de contraintes en fonction du temps). Un tel dispositif est décrit dans le document FR - A1- 2 844 902. Ce dispositif comporte deux ensembles. Le premier ensemble est embarqué dans le système à surveiller. Et le deuxième ensemble se situe en dehors du système à surveiller.

Le premier ensemble mesure au cours du temps des grandeurs environnementales ou factuelles, du système à surveiller, telles que la température, l'humidité, les vibrations, les chocs.... Le premier ensemble comporte une mémoire permettant d'enregistrer les valeurs des grandeurs mesurées. Après avoir obtenu un profil complet de valeurs enregistrées, pouvant durer plusieurs mois, les mesures mémorisées sont transférées, notamment sous forme numérique, vers le deuxième ensemble, qui est une unité de traitement. Le deuxième ensemble analyse les valeurs enregistrées afin de fournir un diagnostic du système. De l'ensemble de ces valeurs enregistrées, l'unité de traitement extrait des informations sur la durée de vie consommée du système à surveiller.

Des modes de défaillance et leurs impacts sont préalablement connus. Par exemple, on sait que, à l'égard d'une fatigue, le système est susceptible d'y résister N fois, avant de tomber en panne. On peut alors mesurer qu'en cas de soumission à cette fatigue, le système a consommé 1/N de sa durée de vie. Pour une autre fatigue, il est susceptible d'y résister M fois, et souffre donc d'une perte de durée de vie égale à 1/M. En sommant progressivement toutes les consommations de durée de vie, ou endommagements, on peut connaître le diagnostic, l'état de fatigue général du système.

Dans un exemple, lorsque le système à surveiller est une carte électronique embarquée dans un avion, les données enregistrées ne sont récupérées et analysées par l'unité de traitement que lorsqu'un profil complet est obtenu. Par exemple, un profil complet peut être obtenu après 350 heures de vol. Ainsi, un laps de temps assez important est observé avant que les données enregistrées ne soient transférées vers l'unité de traitement. Les résultats fournis par l'unité de traitement ne sont pas immédiats. En effet, la quantité de données à analyser est telle qu'il faut compter plusieurs jours avant d'obtenir un pourcentage de durée de vie consommée du système à surveiller. Par conséquent, ce résultat sur les défaillances du système sous surveillance n'est pas adéquat.

Avec le type d'algorithmes connu, les besoins en ressources de calcul ainsi que les besoins en ressources en mémoire sont relativement importants. De ce fait, l'unité de traitement ne peut pas être embarquée.

Une fois l'environnement de fonctionnement d'un équipement électronique bien connu, ainsi que certaines caractéristiques de fonctionnement de cet équipement, il est possible d'utiliser un outil de surveillance très proche du TSMD, qui cependant possède des fonctions plus intelligentes capables d'effectuer des détections de seuils critiques prédéfinis et d'alarmer l'utilisateur. Un HUMS (Health and Usage Monitoring System - Système de surveillance de santé et d'utilisation) est ainsi un appareil capable, par son diagnostic (généralement succinct), d'aider l'utilisateur dans la maintenance de son équipement.

Avec une connaissance plus pointue de l'équipement qui peut être acquise par des modélisations et simulations couplées à des tests réels, il est possible d'optimiser un HUMS en le dotant d'algorithmes de diagnostic et de pronostic spécifiques. Ce HUMS aux fonctions avancées, appelé par ailleurs LAMS (Lifetime Assessment Monitoring System - Système de surveillance d'estimation de fin de vie), est capable de donner, en temps réel, un pourcentage de dégradation (diagnostic). De plus, en analysant l'évolution dans le temps de cette dégradation, une prédiction de fin de vie de l'équipement électronique (pronostic) peut également être donnée.

Actuellement, les systèmes et méthodes de diagnostic et de pronostic fonctionnent à l'aide d'un suivi de paramètres spécifiques et de seuils prédéfinis, comme décrits dans le document US2006/0271255A1. A titre de perfectionnement, ils sont fondés sur des calculs faisant intervenir, pour le calcul de diagnostic, la physique de la défaillance comme décrit dans le document WO2007085756. Le pronostic correspond donc ici à une estimation du nombre de jours de vie restante d'un équipement électronique. Le document:SIYU ZHANG: "Function estimation for multiple indices trend analysis using self organizing mapping" EMERGING TECHNOLOGIES AND FACTORY AUTOMATION, 1994. ETFA '94., IEEE SY MPOSIUM ON TOKYO, JAPAN 6-10 NOV. 1994, NEW YORK, NY, USA,IEEE, 6 novembre 1994 (1994-11-06), pages 160-165, décrit un procédé de détermination du pronostic de fonctionnement d'un système.

Le problème à résoudre est donc, connaissant le diagnostic d'un système, notamment d'un système embarqué, d'établir un pronostic, une date de fin de vie, de préférence prudent (donc à une date antérieure à une fin de vie réelle), et ainsi de produire un signal d'alarme bien avant que le temps présent ne devienne supérieur à ce pronostic. Par opposition, les HUMS ne signalent que le franchissement du seuil critique, lorsqu'il peut être trop tard parce que le système sous surveillance ne sera pas sujet à une maintenance avant longtemps.

Le calcul de la fin de vie, le calcul d'un pronostic, à partir d'un diagnostic souffre des mêmes problèmes que le calcul du diagnostic. Il ne peut pas être embarqué, les ressources de calcul nécessaires, en taille de processeur, en temps de calcul, en alimentation électrique ne sont pas compatibles avec les normes actuelles, en particulier dans les avions où le poids d'un équipement supplémentaire est sévèrement contrôlé.

Dans l'invention, on peut assurer les trois fonctions de TSMD, HUMS et LAMS avec un logiciel embarqué dans la mémoire programme du système à surveiller lui-même. Celui-ci peut alors aussi effectuer entre autres la mesure de sa température, de son humidité relative, ainsi que des chocs (accéléromètre trois axes) et des vibrations qu'il subit. Dans une version courante, il est possible de connecter des modules capteurs en grand nombre (250 aujourd'hui mais ce nombre est extensible), notamment pour des voies à basse fréquence de mesure, i.e. pour la température, l'humidité relative, la pression.

Dans sa version actuelle, le système de surveillance de l'invention est physiquement accessible pour permettre le transfert des données enregistrées sur une carte mémoire. Cependant, une solution sans-fil (par exemple une liaison Zigbee a déjà été testée) peut être mise en place. Dans ce cas, la gestion de la mise en veille ainsi que du réveil d'un module RF (Radio Fréquence) peut être définie en fonction de l'application de surveillance pour optimiser la consommation d'énergie.

L'outil programmé en TSMD doit être configuré avant de démarrer sa surveillance, Les seules informations nécessaires à son fonctionnement sont les différentes fréquences de prise de mesures selon chaque capteur. Il est possible d'implanter directement ces informations dans le système d'exploitation du TSMD et constituer une configuration par défaut correspondant à une application particulière. Dans ce cas, il suffit de placer le TSMD et les modules capteurs au plus près des éléments à surveiller, d'alimenter l'ensemble, et de lancer la surveillance. Il est également possible de télécharger ces informations avant de débuter la surveillance, mais ceci implique la connexion du TSMD à un microordinateur via un câble de liaison série.

Il est possible de stocker 1 Mbits de données dans quatre mémoires non volatiles de 256 kbits chacune. Ces mémoires peuvent être déchargées à la fin de la mission de surveillance à l'aide d'un microordinateur, d'un câble de liaison série s'il n'y a pas de module RF, et de l'application déjà mentionnée précédemment. L'utilisation d'une mémoire amovible et non volatile plus importante de type MMC est également envisageable.

L'estimation de l'état de dégradation d'un équipement électronique peut être fondée sur la surveillance in situ de son environnement qui permet le calcul des dommages associés. L'outil programmé en HUMS peut émettre des avertissements si des seuils à ne pas dépasser ont été configurés. Enfin, des outils sont capables d'effectuer, en temps réel, la simplification des données (avec un seuil minimal de prise en compte) et d'identifier des cycles de fatigue. Il est ainsi possible de n'enregistrer que les profils simplifiés, voire même, uniquement les cycles identifiés et caractérisés par leur amplitude, leur moyenne et leur durée. Par cycle de fatigue, on entend par exemple des cycles en température, comme ceux subis par un avion qui décolle, qui arrive en haute atmosphère, à très basse température, puis qui atterrit. Mais le procédé de l'invention n'est pas cantonné à la mesure de cycle de fatigue. Il peut concerner toutes les autres fatigues dont on sait mesurer une consommation correspondante de durée de vie.

Selon l'invention, le diagnostic et le pronostic embarqué, et en temps réel, ont été développés suivant une méthodologie spécifique. Par exemple, à chaque cycle identifié, un dommage unitaire peut être affecté en se rapportant à une matrice contenant les résultats de simulation (ou de retours d'expérience). La somme de ces dommages unitaires permet d'obtenir une estimation de l'état de santé et donc un diagnostic du système électronique sous surveillance. Les arrondis successifs intervenant dans les calculs peuvent amener à encadrer le diagnostic par une valeur optimiste et une valeur pessimiste. Bien entendu, lorsque le système électronique est soumis à plusieurs mécanismes de défaillance, les dommages associés sont cumulés afin de prendre en compte leurs interactions.

Alors que le TSMD et HUMS sont existants, l'invention porte sur le développement et l'intégration de la fonction LAMS. Selon celle-ci, le calcul du diagnostic (qui peut être un pourcentage d'endommagement par exemple) peut, en étudiant son évolution dans le temps, permettre d'estimer la date de défaillance du système surveillé. Pour cela, plusieurs méthodes existent: la régression linéaire, la moyenne mobile intégrée autorégressive (ARIMA), la décomposition des séries temporelles. Cependant, ces techniques de prévision statistique ne sont pas particulièrement pertinentes ou adaptées au calcul embarqué et en temps réel (disposant de peu de ressources de calcul). Par exemple, le modèle ARIMA, bien que particulièrement performant, exige l'identification du bon nombre de retards et des coefficients qui devraient être utilisés, et est trop exigeante en terme de ressources. La régression linéaire, quant à elle, peut se révéler complètement fausse dès lors que l'évolution n'est pas linéaire. Et l'expérience montre que l'évolution du diagnostic est rarement linéaire en environnement réel.

Pour résoudre ce problème, dans l'invention, on a choisi de réaliser une régression linéaire, mais par morceaux. On obtient alors le résultat que la méthode est simple, qu'elle peut être embarquée, et qu'elle s'affranchit des non linéarités. En pratique, les morceaux peuvent être déterminés par la mesure du coefficient de corrélation linéaire. Dès qu'il dépasse un seuil, on décide de créer un autre morceau. Ou bien les morceaux sont de longueur fixée, par exemple toutes les 100 mesures, chaque mesure étant faite une fois par minute. Les différents morceaux mis bout à bout permettent alors, dans le prolongement du dernier morceau, d'établir un pronostic réaliste rapidement. En outre, il est en temps réel car à chaque nouveau morceau un nouveau pronostic est établi.

L'invention a donc pour objet un procédé de détermination du pronostic de fonctionnement d'un système dans lequel,
- on effectue des mesures d'une valeur environnementale d'un environnement environnant le système,
- on traite ces mesures dans une unité de traitement afin de déterminer un endommagement du système,
- cet endommagement résulte d'un historique du système dans l'environnement, et
- on en déduit un pronostic de durée de vie de bon fonctionnement,
caractérisé en ce que
- on crée des morceaux à partir des mesures effectuées, lesdits morceaux étant créés à l'aide de la mesure d'un coefficient de corrélation linéaire, dès qu'un morceau dépasse un seuil prédéfini un nouveau morceau est créé,
- on applique une régression linéaire par morceaux,
- on déduit le pronostic de durée de vie à partir de la régression linéaire par morceaux.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1: un schéma d'un dispositif mettant en oeuvre le procédé de l'invention;
- Figures 2 et 3: des diagrammes d'acquisition de mesures, de simplification des mesures, et de calcul et d'acquisition de cycles de vie d'un système surveillé avec le procédé de l'invention;
- Figure 4 une table de consommation de durées de vie attachée aux cycles de vie présentés sur les figure 2 et 3;
- Figure 5: une illustration d'un calcul des différentes régressions linéaires:
   Figure 6: un exemple de diagnostic et de pronostic associé, encadrés par une valeur pessimiste T1 et une valeur optimiste T2, à un instant T;
- Figure 7: l'évolution d'un pronostic de fin de vie d'un système sous surveillance;
- Figure 8 : un algorithme de pronostic de fin de vie en temps réel en réalisation embarquée;
- Figure 9: un perfectionnement de l'algorithme précédent montrant l'intégration des pronostics optimistes et pessimistes simultanés.

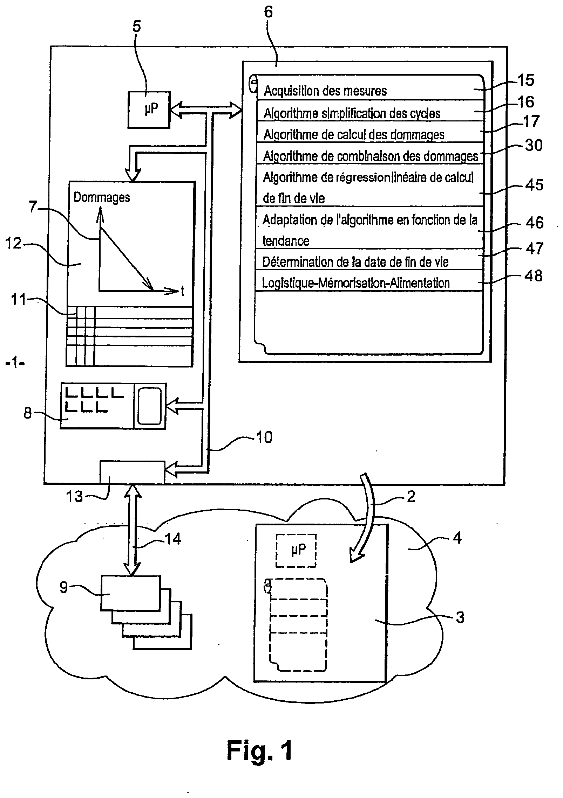

La figure 1 montre un schéma d'un dispositif 1 mettant en oeuvre le procédé de l'invention. Le dispositif 1 permet une surveillance en temps réel. Il est de préférence embarqué 2 dans un système 3 à surveiller. Le dispositif 1 est une intelligence autonome embarquée permettant de diagnostiquer l'état de santé du système 3. Dans un exemple, le système 3 à surveiller est une carte électronique embarquée à bord d'un avion. Dans l'invention, le dispositif 1 de surveillance mesure et analyse de manière instantanée une valeur d'une grandeur environnementale d'un environnement 4 du système 3. Dans un exemple, la valeur environnementale mesurée et analysée est une température du système 3. En particulier on mesure la température des joints de brasure sur une carte électronique du système 3.

Le dispositif 1 surveille ainsi les cycles thermiques auxquels est soumise la carte électronique. Par exemple, pour un avion ces cycles sont ceux subis par des parties de l'avion soumises à de très basses températures, par exemple à -40°C, et à de très hautes températures, au sol en plein désert sous le soleil, par exemple à +85°C. Bien entendu, d'autres types de grandeurs environnementales telles que notamment l'humidité, la pression, les chocs peuvent être mesurées.

Le dispositif 1, et donc le dispositif 3, est souvent réalisé sous forme de circuit intégré. Il comporte une unité de traitement. Cette unité de traitement comporte un microprocesseur 5 et une mémoire programme 6. Le microprocesseur 5 est relié à la mémoire programme 6, à une mémoire de donnée 7, à un écran-clavier 8 (facultatif) et à au moins un capteur 9 par l'intermédiaire d'un bus de communication 10 interne. La mémoire 7 comporte une zone 11 contenant par exemple une matrice de cycles à défaillances M et une zone 12 contenant une information de pronostic. Le dispositif 1 est relié au capteur 9 par une interface 13 reliée au bus 10 et à un bus externe 14 relié à tous les capteurs. Le système 3 est de même type. Soit le dispositif 1 est embarqué dans le système 3, soit il en est déporté..

Dans une variante, l'unité de traitement 1 est embarquée dans le système 3 sans pour autant y être intégrée, comme c'est le cas de la figure 1.

Le dispositif 1 est alimenté en énergie par une batterie autonome, non représentée. Cette batterie est de préférence rechargeable. Lorsque la batterie est à changer, avant la destruction du système 3 à surveiller, les données concernant la durée de vie consommée peuvent être conservées dans une mémoire non volatile.

Le dispositif 1 émet par l'interface d'entré sortie 10, des ordres de mesure au capteur 9. Le dispositif 1 reçoit par cette interface 10 la mesure réalisée par le capteur 9. Le capteur 9 mesure une valeur d'une grandeur environnementale 4. Il transmet cette mesure au microprocesseur 5 sous forme de signaux électriques par l'intermédiaire des bus 14 et 10. Le capteur 9 est dans un exemple un capteur de température.

Le capteur 9 peut être remplacé par d'autres types de capteurs existants. En fonction des différents modes de réalisation de l'invention, le dispositif 1 peut comporter autant de capteur 9 qu'il est nécessaire pour mettre en oeuvre l'application. Le capteur 9 peut être situé sur le système 3 à surveiller.

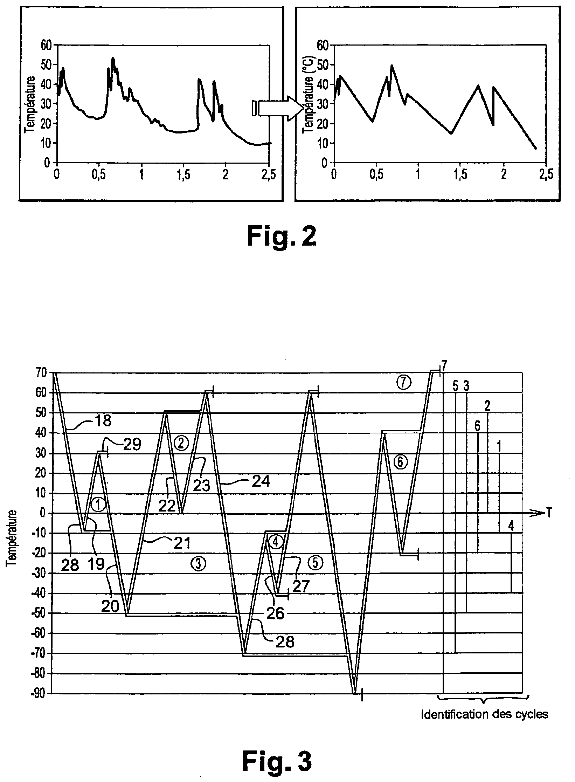

La mémoire 6 de programme est divisée en plusieurs zones, chaque zone correspondant à des instructions pour réaliser une fonction du dispositif 1. Une zone 15 comporte ainsi des instructions pour l'acquisition des mesures effectuées par le capteur 9. La partie gauche de la figure 2 montre à cet égard l'acquisition de valeurs de températures en fonction du temps. Une zone 16 comporte des instructions pour appliquer, à chaque mesure acquise, un algorithme de simplification des données afin de déterminer plus facilement des extrema. Typiquement les mesures de la partie gauche de la figure 2 sont lissées en des mesures montrées sur la partie droite. Le profil simplifié, lissé, est constitué de pic minimum et de pic maximum successifs. Ce profil simplifié peut être obtenu sur la base d'un filtre passe bas avec un seuil de filtrage préalablement défini. Le dispositif considère que deux extrema consécutifs forment un demi-cycle. La zone 16 comporte de préférence tous les traitements évoqués dans le document WO2007085756.

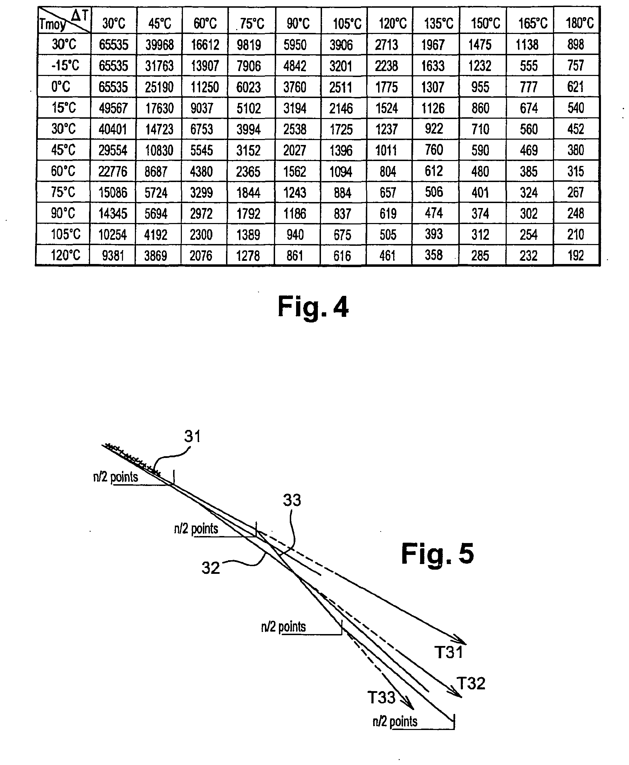

Une zone 17 comporte des instructions pour appliquer à chaque extremum déterminé un algorithme de comptage de cycles afin de déterminer un cycle thermique auquel est soumis le système 3, et par lecture de la table de la figure 4, produire les durées de vie consommées du système 3 à partir des cycles déterminés. L'estimation de cette durée de vie consommée s'effectue par lecture de la zone 11 de la mémoire contenant la matrice de cycles à défaillances de la figure 3 qui est obtenue par simulation ou par retour d'expériences. Pour chaque cycle déterminé, le dispositif détermine une valeur d'endommagement.

L'algorithme de comptage de cycles comporte trois paramètres: un paramètre de différence de température ΔT entre deux extrema consécutifs formant un demi-cycle, une température moyenne du demi-cycle Tmoy, et un temps de rampe ou durée du demi-cycle, tramp.

L'algorithme de comptage de cycles est une fonction récursive. Par conséquent, pour les besoins en temps réel ainsi qu'en taille mémoire vive, trois mémoires tampon tournantes, une par paramètre, sont utilisées pour stocker les demi cycles. Dans un mode de réalisation préféré, ces trois mémoires tampons peuvent stocker jusqu'à dix demi-cycles consécutifs. La taille de ces mémoires tampons peut être ajustée selon l'application.

Des tests effectués sur de nombreux profils de température ont permis de mettre en évidence un rendement optimal de l'algorithme de comptage de cycles, lors d'utilisation de mémoire tampon ayant une profondeur de dix demi-cycles. En effet, aucun demi-cycle n'a été perdu avec l'utilisation de telles mémoires tampons.

Pour déterminer un cycle, l'algorithme 16 vérifie si les deux conditions suivantes sont respectées. La première des conditions est d'avoir au moins deux demi-cycles stockés dans la mémoire tampon. La seconde des conditions est d'avoir une différence de température ΔT d'un nouveau demi-cycle supérieure à celle d'un demi-cycle précédent. La différence de températures ΔT est la valeur absolue de la différence des températures des extremums détectés, formant le demi-cycle. Par exemple, figure 3, des demi-cycles 18 à 27 sont représentés. L'algorithme 16 calcule que la différence de température du deuxième demi-cycle 19 est inférieure à la différence de température du troisième demi-cycle 20. Dans ce cas, le deuxième demi-cycle 19 est comptabilisé comme étant un cycle. Les extrema 28 et 29 du deuxième demi-cycle sont en conséquence supprimés.

La durée de vie consommée est alors calculée à chaque nouveau cycle ou demi-cycle résiduel à l'aide de la relation en lisant la table 11 visible figure 4, en extrayant pour chaque cycle de température une température moyenne Tmoy et une différence ΔT. Cette lecture permet de convertir chaque cycle déterminé en une valeur d'endommagement égale à l'inverse du nombre de cycles à défaillances correspondant à une fatigue de ce type. Elle effectue un cumul de ces valeurs d'endommagement. Ce cumul peut comporter la prise en compte par des instructions chargées dans une zone 30 de la mémoire 6, figure 1, d'une combinaison des dommages de différentes natures, provenant de différents types d'environnement (humidité, pression, ...). Ce cumul est transmis à un comparateur. Ce comparateur reçoit à une deuxième entrée un seuil préalablement défini d'endommagement maximal du système 3. Dès que le cumul des valeurs d'endommagement est supérieur au seuil, le dispositif 1 déclenche un avertissement, permettant d'optimiser la maintenance du système. Cet avertissement peut être le déclenchement d'une alarme sonore et/ou visuelle et/ou l'envoi d'un message à un opérateur. L'envoi de ce message peut être transmis au moyen de protocoles de communication sans fils, tels que ceux de la norme UMTS ou la norme GSM, ou Zigbee, etc....

Selon l'invention, on ne se satisfait pas d'une constatation opportuniste du dépassement d'un seuil. On préfère calculer un pronostic de durée de vie (par exemple un nombre de jours de fonctionnement avant défaillance). L'expérience montre que la simple extrapolation du cumul des endommagements rapporté à la durée d'utilisation du système 3 depuis sa mise en service n'est pas assez précise. Par exemple, de multiples systèmes pouvant être à changer dans un avion, à des dates différentes, et les avions n'étant arrêtés pour des visites dites de type A que toutes les 350 heures de vol environ (selon le type d'avion), il convient de connaître avec précision ce pronostic pour organiser au mieux les remplacements préventifs.

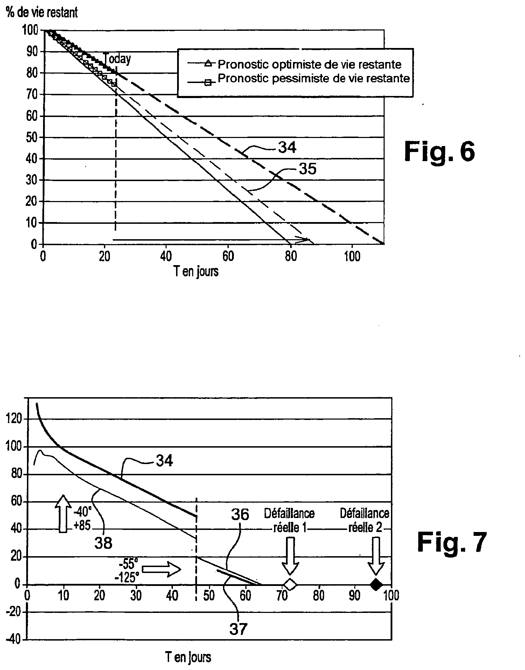

Une régression linéaire, figure 5 consiste, à partir d'un nuage de points de mesure à déterminer une droite d'équation y = ax + b, à estimer les valeurs a et b et à quantifier la validité de cette relation grâce au coefficient de corrélation linéaire. Dans le cas présent, les points portés sur le diagramme de la figure 5 représentent, en fonction du temps, au temps présent et au fur et à mesure, l'état de santé du système 3. Ainsi d'une mesure à une autre, l'état de santé ne peut que baisser, mais il baisse plus ou moins selon la rigueur du cycle ou de la fatigue qui l'a justifié. Si le cycle a été clément, par exemple entre -40°C et +85°C, l'endommagement sera faible, en tous cas moins fort que si le cycle a été rigoureux, par exemple entre -55°C et +125°C. Sur les graphes des figures 5 et 6, le temps est en abscisse et l'état de santé issu des endommagements cumulés est en ordonnée.

Tenter une régression linéaire, revient donc premièrement à chercher la droite D dont l'équation est y = a x + b et qui passe au plus près des points. Passer au plus près, selon la méthode des moindres carrés, c'est rendre minimale la somme des carrés des écarts des points à la droite. On peut aussi chercher la droite D' d'équation x = a'y + b' qui rende minimale la somme comparable. On souhaite évidemment tomber sur la même droite. Ce sera le cas si et seulement si a' = 1/a. On appelle la quantité aa' le coefficient de corrélation linéaire entre x et y. En pratique sa valeur absolue est rarement égale à 1, mais on estime généralement que l'ajustement est valide dès que ce coefficient a une valeur absolue supérieure à √3/2. Dans l'invention on peut se servir de ce coefficient de corrélation, avec une valeur préférée de 98%, pour déterminer la longueur des morceaux.

De préférence toutefois, on procède à un compte régulier des mesures. Jusqu'à atteindre les n mesures, par exemple n vaut 200, on calcule une droite 31, figure 5, de régression linéaire. On peut simultanément calculer par prolongement de cette droite 31 un pronostic T31 de durée de vie. Dans l'invention, on tient compte de l'évolution de cette droite pour un groupe suivant de maximum n mesures. Soit les n mesures suivantes conduisent à la même droite, soit elles la modifient. La droite modifiée pourrait aussi par son prolongement produire un pronostic de fin de vie. Toutefois, comme le phénomène n'est pas linéaire, la proposition ne serait pas juste.

Aussi on préfère calculer un nouveau segment de droite 32 à partir du nouveau groupe de mesures. A titre de perfectionnement, alors qu'on calcule les droites 31 et 32 sur un maximum de n mesures, les n mesures prises en compte à chaque fois ne sont pas nécessairement indépendantes. On peut choisir au contraire de faire ce calcul toutes les n/2 mesures, en prenant à chaque fois seulement n/2 mesures nouvelles associées à n/2 anciennes mesures directement précédentes. Les calculs des régressions linéaires limitées à n points sont effectués en permanence et non pas seulement en atteignant les n points. De préférence, c'est uniquement sur dépassement du seuil du coefficient de corrélation de la régression linéaire principale qu'une réaffectation est effectuée: elle est réinitialisée avec la régression linéaire limitée qui possède le plus de points (entre n/2 et n).

On constate à l'examen de la figure 5 que la droite 31 donnait un pronostic (favorable) T31, alors que la droite 32 donne un pronostic moins favorable T32. A l'issue de l'acquisition du quatrième sous groupe de n/2 mesures, on montrera que l'algorithme de l'invention remplace la droite 32, et son pronostic T32, par une droite 33, et un pronostic T33 encore moins favorable. Ainsi de suite, le pronostic évolue dans le temps, de T31 à T33, et cette information est mise à la disposition des opérateurs de maintenance pour qu'ils en tiennent compte pour leurs remplacements préventifs. Par exemple un pronostic à cinq jours, implique le remplacement préventif d'un système 3 sous surveillance si, lors d'une visite de type A, on sait que la prochaine visite de type A est dans 350 heures de vol.

La figure 6 montre un exemple de diagnostic et de pronostic encadrés par une valeur pessimiste et une valeur optimiste à un instant T ainsi que leurs pronostics T1 et T2 respectifs associés. La méthode de régression linéaire adaptative développée permet la prise en compte des variations environnementales optimiste et pessimiste. L'évaluation optimiste 34, dans le cas des mesures de température, ne tient pas compte des demi-cycles éliminés lors du traitement, alors que la méthode pessimiste 35 tient compte de toutes les fatigues éventuelles. En parallèle sont donc calculées trois régressions linéaires classiques. La régression linéaire principale, commençant à T0 et qui se poursuit tant que le coefficient de corrélation est supérieur à un seuil défini (0,98 par exemple). Les deux autres régressions linéaires seront calculées sur un maximum de n points (200 par exemple): la première 31 commençant à T0, la seconde 32 après n/2 points de mesure, et ainsi de suite. Leur calcul est actualisé à chaque nouvelle mesure et réinitialisé toutes les n mesures. Lorsque le coefficient de corrélation de la régression linéaire principale devient inférieur au seuil, cette régression linéaire prend alors immédiatement la valeur de la régression linéaire ayant le plus de points (compris entre n/2 et n) parmi les deux régressions linéaires limitées à n points. Ainsi, la régression linéaire principale tient compte des derniers évènements survenus et par extrapolation permet un meilleur pronostic de fin de vie (un nombre de jours dans un exemple préféré).

Lorsque le calcul du diagnostic est encadré par deux valeurs minimales et maximales, il faut doubler le nombre de régressions linéaires. La figure 7 présente un exemple de l'évolution au cours du temps des valeurs T1 et T2 pour un système électronique 3 dont on cherche à donner le pronostic de fin de vie. Le pronostic correspond à l'intersection de la droite résultante de la régression linéaire principale avec l'axe des abscisses (durées) pour une fin de vie planifiée à 100% d'endommagement. Cependant, afin de planifier une maintenance préventive, ce seuil de 100% peut être défini à un taux d'endommagements moins élevé en fonction de la connaissance que l'on possède du système sous surveillance comme par exemple à 60%. Dans ce cas, les pronostics donnés représentés par T1 et T2 seront donnés par l'intersection des droites résultantes des régressions linéaires principales avec la droite Y=40% de vie restante, figure 6.

Selon la figure 7, dans le cas d'un double pronostic (optimiste et pessimiste), et si un changement d'affectation de la régression linéaire principale survient (détection du dépassement de seuil de corrélation) dans l'un des deux calculs, alors la cohérence optimiste - pessimiste sera conservée au besoin en affectant la même valeur à la régression linéaire qui n'aura pas encore subi sa réaffectation, par exemple, figure 7, du jour 46 au jour 53. La figure 7 montre également que par un changement de conditions d'exposition, de -40°C+85°C à -55°C+125°C, le calcul adaptatif de l'invention permet de remplacer des courbes optimistes et pessimistes 34 et 35 par deux nouvelles courbes 36 et 37, donnant un pronostic à 65 jours bien moins favorable que le pronostic à 75 jours attendu. Avec l'invention, on mesure ainsi une tendance au temps présent de l'évolution de la durée de vie consommée, et on en déduit, au temps présent un pronostic corrigé de durée de vie consommée. L'expérience a montré que pour deux systèmes surveillés, les défaillances se sont produites respectivement à 70 jours et 97 jours, à une date ultérieure à celle calculée in fine par le pronostic.

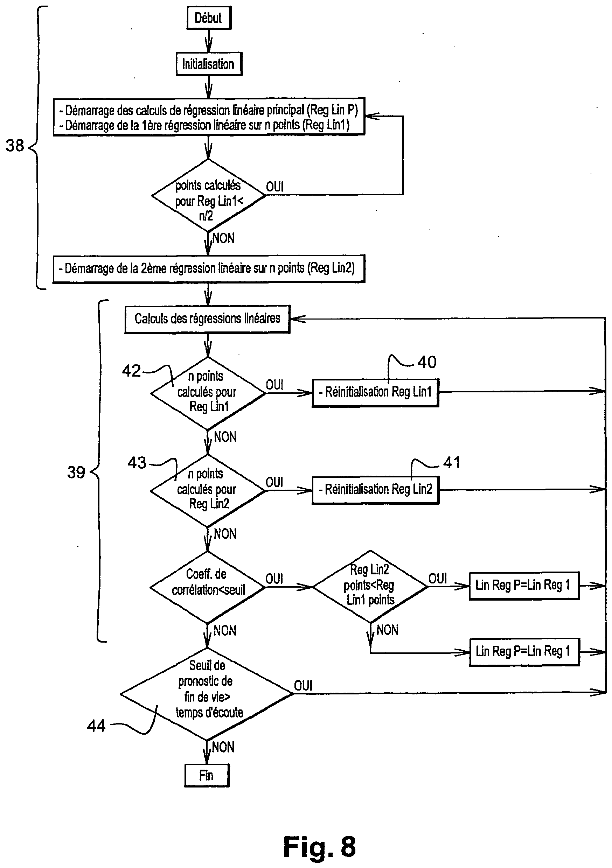

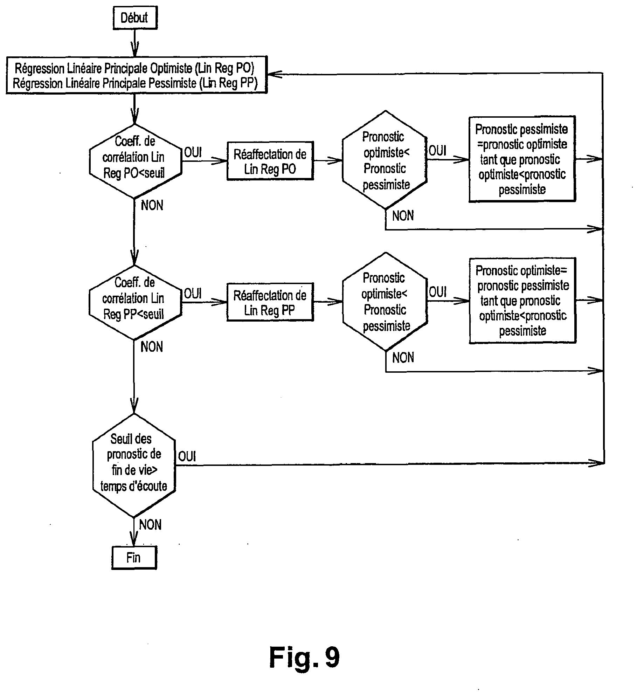

Les figures 8 et 9 présentent les algorithmes mis en oeuvre dans l'invention pour le calcul du pronostic de fin de vie d'un système 3 sous surveillance. L'algorithme de la figure 9 n'est qu'une duplication de l'algorithme de la figure 8, appliqué au cas où les calculs optimistes et pessimistes sont entrepris. L'algorithme de la figure 8 comporte, d'une manière classique une initialisation 38. Il comporte aussi les calculs 39 d'une régression linéaire principale et de deux régressions linéaires limitées à n mesures et décalées temporellement de n/2 mesures. Les régressions linéaires limitées sont réinitialisées, 40 et 41 chaque fois qu'un nouveau groupe de n points de mesures a été pris en compte. Les étapes 40 et 41 succédant à des étapes de test 42 et 43 respectivement fondent le calcul des régressions linéaires par morceaux. Un test 44 mesure que le pronostic de fin de vie est supérieur au temps présent, ou à une prochaine date de visite de type A, B, C ou D, pour produire une information de remplacement.

Selon l'algorithme de la figure 9, l'opération de l'algorithme de la figure 8 est effectuée deux fois : une fois pour l'appréciation optimiste et une fois pour l'appréciation pessimiste. Ainsi, on mesure deux pronostics, un pronostic optimiste et un pronostic pessimiste, le pronostic réel étant contenu entre ces deux pronostics.

La mémoire 6, figure 1 comporte donc des zones 45 à 47 où sont mémorisées respectivement les fonctions 38, 39 et 44 des algorithmes de la figure 8 et de la figure 9. Elle comporte aussi une zone 48 servant de système d'exploitation, de gestion des mesures, de l'alimentation, et éventuellement de la transmission des résultats.

## Revendications

1. Procédé de détermination du pronostic de fonctionnement d'un système dans lequel,
- on effectue des mesures d'une valeur environnementale d'un environnement environnant le système,
- on traite ces mesures dans une unité de traitement afin de déterminer un endommagement du système,
- cet endommagement résulte d'un historique du système dans l'environnement, et
- on en déduit un pronostic de durée de vie de bon fonctionnement,
**caractérisé en ce que**
- on crée des morceaux à partir des mesures effectuées, lesdits morceaux étant créés à l'aide de la mesure d'un coefficient de corrélation linéaire, dès qu'un morceau dépasse un seuil prédéfini un nouveau morceau est créé,
- on applique une régression linéaire par morceaux,
- on déduit le pronostic de durée de vie à partir de la régression linéaire par morceaux.

2. Procédé selon la revendication 1, **caractérisé en ce que**
- on mesure une tendance au temps présent d'une évolution de vie consommée, et on en déduit, au temps présent un pronostic corrigé de durée de vie de fonctionnement jusqu'à défaillance.

3. Procédé selon l'une des revendications 1 à 2, **caractérisé en ce qu'**on mesure la tendance par une régression numérique adaptative.

4. Procédé selon la revendication 3, **caractérisé en ce que**
- la régression linéaire s'applique sur l'ensemble des points depuis une dernière initialisation.

5. Procédé selon la revendication 4, **caractérisé en ce que**
- on calcule parallèlement une nouvelle tendance sur un maximum de n points tous les n/2 points, par exemple n vaut 200 points.

6. Procédé selon l'une des revendications 3 à 5, **caractérisé en ce que**
- on calcule une première tendance,
- puis on calcule une deuxième tendance sur un lot de maximum n points glissants, et
- on réinitialise la première tendance en lui affectant la deuxième tendance si le coefficient de corrélation de la première tendance descend au-dessous d'un seuil prédéfini, par exemple 98%.

7. Procédé selon l'une des revendications 1 à 6, **caractérisé en ce que**
- on mesure deux pronostics, un pronostic optimiste et un pronostic pessimiste, le pronostic réel étant contenu entre ces deux pronostics.

8. Procédé selon l'une des revendications 1 à 3, **caractérisé en ce que**
- on mesure la température, en particulier au niveau des joints de brasure sur une carte électronique du système surveillé.

## Patentansprüche

1. Verfahren zur Bestimmung der Betriebsprognose eines Systems, wobei
- Messungen eines Umgebungswertes einer Umgebung, die das System umgibt, durchgeführt werden,
- diese Messungen in einer Verarbeitungseinheit verarbeitet werden, um eine Beschädigung des Systems zu bestimmen,
- diese Beschädigung aus einer Historie des Systems in der Umgebung resultiert, und
- daraus eine Prognose der Dauer des einwandfreien Betriebs abgeleitet wird,
**dadurch gekennzeichnet, dass**
- aus den durchgeführten Messungen Stücke erzeugt werden, wobei die Stücke mithilfe der Messung eines linearen Korrelationskoeffizienten erzeugt werden, wobei, sobald ein Stück einen vordefinierten Schwellenwert überschreitet, ein neues Stück erzeugt wird,
- stückweise eine lineare Regression angewendet wird,
- die Prognose der Lebensdauer aus der stückweisen linearen Regression abgeleitet wird.

2. Verfahren nach Anspruch 1, **dadurch gekennzeichnet, dass**
- eine zum gegenwärtigen Zeitpunkt vorliegende Tendenz einer Veränderung der verbrauchten Lebensdauer gemessen wird und daraus zum gegenwärtigen Zeitpunkt eine korrigierte Prognose der Betriebssystemlebensdauer bis zum Ausfall abgeleitet wird.

3. Verfahren nach einem der Ansprüche 1 bis 2, **dadurch gekennzeichnet, dass** die Tendenz durch eine adaptive numerische Regression gemessen wird.

4. Verfahren nach Anspruch 3, **dadurch gekennzeichnet, dass**
- die lineare Regression auf sämtliche Punkte seit einer letzten Initialisierung angewendet wird.

5. Verfahren nach Anspruch 4, **dadurch gekennzeichnet, dass**
- parallel eine neue Tendenz anhand von maximal n Punkten alle n/2 Punkte berechnet wird, wobei n zum Beispiel 200 Punkte beträgt.

6. Verfahren nach einem der Ansprüche 3 bis 5, **dadurch gekennzeichnet, dass**
- eine erste Tendenz berechnet wird,
- anschließend eine zweite Tendenz anhand einer Menge von maximal n gleitenden Punkten berechnet wird, und
- die erste Tendenz reinitialisiert wird, indem ihr die zweite Tendenz zugewiesen wird, falls der Korrelationskoeffizient der ersten Tendenz sich bis unter einen vordefinierten Schwellenwert, zum Beispiel 98 %, verringert.

7. Verfahren nach einem der Ansprüche 1 bis 6, **dadurch gekennzeichnet, dass**
- zwei Prognosen gemessen werden, eine optimistische Prognose und eine pessimistische Prognose, wobei die reale Prognose zwischen diesen zwei Prognosen enthalten ist.

8. Verfahren nach einem der Ansprüche 1 bis 3, **dadurch gekennzeichnet, dass**
- die Temperatur gemessen wird, insbesondere an Lötstellen auf einer Leiterplatte des überwachten Systems.

## Claims

1. Method for determining the operating forecast of a system in which
- measurements are performed of an environmental value of an environment surrounding the system,
- these measurements are processed in a processing unit so as to determine a damage to the system,
- this damage results from a history of the system in the environment, and
- a forecast of lifetime of proper operation is deduced therefrom,
**characterized in that**
- pieces are created on the basis of the measurements performed, said pieces being created with the aid of the measurement of a linear correlation coefficient, as soon as a piece exceeds a predefined threshold a new piece is created,
- a piecewise linear regression is applied,
- the lifetime forecast is deduced on the basis of the piecewise linear regression.

2. Method according to Claim 1, **characterized in that**
- a trend is measured at the present time of a consumed life evolution, and a corrected forecast of operating lifetime until failure is deduced therefrom at the present time.

3. Method according to one of Claims 1 to 2, **characterized in that** the trend is measured by an adaptive digital regression.

4. Method according to Claim 3, **characterized in that**
- the linear regression is applied over the set of points from a last initialization.

5. Method according to Claim 4, **characterized in that**
- a new trend is calculated in parallel over a maximum of n points every n/2 points, for example n equals 200 points.

6. Method according to one of Claims 3 to 5, **characterized in that**
- a first trend is calculated,
- and then a second trend is calculated over a batch of maximum n sliding points, and
- the first trend is reinitialized by assigning it the second trend if the correlation coefficient of the first trend drops below a predefined threshold, for example 98%.

7. Method according to one of Claims 1 to 6, **characterized in that**
- two forecasts are measured, an optimistic forecast and a pessimistic forecast, the real forecast being contained between these two forecasts.

8. Method according to one of Claims 1 to 3, **characterized in that**
- the temperature is measured, in particular at the level of the solder joints on an electronic card of the monitored system.
